# EUROPÄISCHE PATENTSCHRIFT

(11) **EP 1 436 968 B1**
(45) Veröffentlichungstag und Bekanntmachung des Hinweises auf die Patenterteilung: **15.11.2006**
(21) Anmeldenummer: 02700005.8
(22) Anmeldetag: 04.03.2002
(51) Int. Cl.: H04L 29/08, H04L 12/14

(54) **INTERNETZUGANGSSYSTEM ZUM VERGEBÜHREN DES HERUNTERLADENS VON INHALTEN VON EINEM INTERNETSERVER AUF EINEN CLIENTCOMPUTER**
INTERNET ACCESS SYSTEM FOR TAXING THE DOWNLOADING OF CONTENTS OF AN INTERNET SERVER TO A CLIENT COMPUTER
SYSTEME D'ACCES A INTERNET POUR LA TAXATION DU TELECHARGEMENT DE CONTENUS D'UN SERVEUR INTERNET A UN ORDINATEUR CLIENT

(30) Priorität: 15.10.2001 AT 16232001
(43) Veröffentlichungstag der Anmeldung: 14.07.2004
(73) Patentinhaber: KAPSCH AKTIENGESELLSCHAFT, 1121 Wien (AT)
(72) Erfinder: HAUSHERR, Wolfgang, A-1230 Wien (AT)
(74) Vertreter: Weiser, Andreas
(86) Internationale Anmeldenummer: PCT/AT2002/000062
(87) Internationale Veröffentlichungsnummer: WO 2003/034691

(56) Entgegenhaltungen:
- EP-A- 0 917 327
- EP-A- 0 924 630
- EP-A- 1 104 142
- WO-A-00/68862
- WO-A-01/16768
- WO-A-01/27884
- SIRBU M ET AL: "NETBILL: AN INTERNET COMMERCE SYSTEM OPTIMIZED FOR NETWORK- DELIVERED SERVICES" IEEE PERSONAL COMMUNICATIONS, IEEE COMMUNICATIONS SOCIETY, US, Bd. 2, Nr. 4, 1. August 1995 (1995-08-01), Seiten 34-39, XP000517588 ISSN: 1070-9916

## Beschreibung

Die vorliegende Erfindung betrifft ein Computersystem zum Zurverfügungstellen des Zuganges zum Internet für einen Klientcomputer und zum Vergebühren des Herunterladens von Inhalten von einem Internetserver auf den Klientcomputer, wobei der Klientcomputer das Herunterladen durch Senden einer eindeutigen Netzadresse des Inhaltes an den Internetserver auslöst, mit
einem Zugangsserver für den Zugriff der Klientcomputer, welcher jeden Klientcomputer mittels einer Identität identifiziert,
einem Verrechnungsserver, der für jede Identität ein Konto führt und auf eine Belastungsaufforderung hin mit einer Gebühr belastet, und
einem Proxy, welcher den Zugangsserver mit dem Internet verbindet und von Klientcomputern empfangene eindeutige Netzadressen über das Internet zu den Internetservern und von den Internetservern über das Internet heruntergeladene Inhalte zu den Klientcomputern weiterleitet.

Computersysteme dieser Art werden von Internetserviceprovidern (sog. "ISPs") eingesetzt, um einer Vielzahl von einzelnen Klientcomputern Zugang zum Internet zu verschaffen. Abhängig von der Anbindung der Klientcomputer, z.B. in Form einer Dial-up-Verbindung über Modem, ADSL usw. oder über ein eigenes Computernetz, Intranet, Inhouse-Datennetz usw., wird der Zugangsserver als "remote access server" (RAS) oder "network access server" (NAS) bezeichnet. In jedem Fall stellt das Computersystem ein Gateway zum Internet dar, und der Internetserviceprovider verfügt über Abrechnungsverträge mit den Benutzern der Klientcomputer, um die Zugangsdienstleistung über den Verrechnungsserver abzurechnen. Unter den Begriff "Proxy" werden in der vorliegenden Beschreibung auch Firewalls subsumiert.

Computersysteme der einleitend genannten Art sind z.B. aus der WO 00/68862, der US 6 119 160, US 6 188 994, EP O 924 630 oder WO 01/16768 bekannt.

Die WO 00/66862 zeigt ein ISP-Zugangssystem mit RAS-Servern, einem Traffic-Balancing-Switch und einem Router. Der Switch wird von einem Zugangsserver und einer Benutzerprofildatenbank mit Zustandsinformationen ("access states") der einzelnen Benutzer-IPs versorgt und gibt auf Grundlage des jeweiligen access state des Benutzers den Zugriff auf bestimmte URLs frei oder nicht. Damit kann eine zeitabhängige Verrechnung durchgeführt werden, deren Höhe vom access state des Bneutzers abhängt, d.h. abhängig von einem Zustand des Klientcomputers. Eine Vergebührung in bezug auf einzelne heruntergeladene Inhalte ist nicht möglich.

Bei dem System der US 6 119 160 sendet der Zugangsserver beim Ein- und Auswählen eines Benutzers bzw. beim Auf- und Abbau einer PPP-Verbindung Start- und Stop-Belastungsaufforderungen an den Verrechnungsserver. Damit kann eine zeit- oder byteabhängige Verrechnung durchgeführt werden; eine genauere Vergebührung in bezug auf einzelne heruntergeladene Inhalte ist ebenfalls nicht möglich.

Die US 6 188 994 offenbart das allgemeine Konzept, daß der Internetserviceprovider beliebige Arten von Gebühren im Auftrag des Betreibers eines Internetservers, beispielsweise eines Online-Shops usw., vom Benutzer einhebt. Dabei werden Nachrichten im Dreieck zwischen Benutzer, Internetserviceprovider und Internetserver ausgetauscht, was den Netzwerkverkehr erhöht und den Vorgang verlangsamt und verkompliziert. Für die Verrechnung kleinster Beträge (sog. "micropayment"), bei dem hohe Geschwindigkeit und geringstmögliche Transaktionskosten im vordergrund stehen, ist dieses Konzept daher wenig geeignet.

Die EP 0 924 630 beschreibt einen Proxy, der alle Webzugriffe des Benutzers abfängt und vom Internetserver zunächst nur einen Seitenheader anfordert, der angibt, ob der herunterzuladende Inhalt vergebührt werden soll oder nicht. Dieses System verdoppelt den Netzwerkverkehr, mit der Folge einer langsameren Ausführungszeit und höheren Fehleranfälligkeit.

Die WO 01/16768 befaßt sich mit einem Proxy, der die Webzugriffe des Benutzers auf das Auftreten bestimmter Codes überwacht, beispielsweise das "Anklicken" eines "Buy-Knopfes" auf einer vom Internetserver dargebotenen Seite. Wird ein solcher Code erkannt, schaltet sich der Proxy ein, fängt die Kaufanforderung ab und führt eine Transaktion im Dreieck zwischen Benutzer, Proxy (Internetserviceprovider) und Internetserver durch. Der Nachrichtenaustausch im Dreieck verlangsamt wieder die Ausführungsgeschwindigkeit und erhöht den Netzwerkverkehr, und die Inhaltsseiten des Internetservers müssen überdies mit bestimmten Codewörtern versehen werden, was die Akzeptanz verringert. Auch dieses System ist daher für die Verrechnung kleinster Beträge wenig geeignet.

Die Erfindung setzt sich zum Ziel, ein neuartiges Computersystem der einleitend genannten Art zu schaffen, welches die Vergebührung des Herunterladens beliebiger Inhalte von Internetservern ermöglicht und dabei möglichst einfach und transparent aufgebaut ist, um eine hohe Fehlersicherheit und minimale Transaktionskosten zu erreichen, welche Voraussetzung für einen Masseneinsatz ("micropayment") sind.

Diese Ziele werden gemäß der Erfindung dadurch erreicht, daß das Computersystem weiters aufweist:
eine Datenbank, die zumindest eine vorgebbare Liste von eindeutigen Netzadressen und zugeordneten Gebühren enthält und mit dem Proxy in Verbindung steht,
wobei der Proxy jede von einem Klientcomputer gesendete eindeutige Netzadresse überwacht und in der Datenbank nachschlägt, ob dieser eine Gebühr zugeordnet ist, und
bejahendenfalls, nachdem er zuvor die Identität des die eindeutige Netzadresse sendenden Klientcomputers vom Zugangsserver abgefragt hat, eine Belastungsaufforderung an den Verrechnungsserver sendet.

Auf diese Weise wird ein Computersystem mit einer völlig neuen Art von Proxy geschaffen. Der Proxy der Erfindung kann kostenpflichtige Webzugriffe für den Benutzer vollkommen transparent vergebühren. Für die Vergebührung sind keine zusätzlichen Transaktionen zwischen Benutzer und Proxy oder zwisehen Proxy und Internetserver erforderlich. Das Kriterium der Vergebührung ist einzig der Vergleich der eindeutigen Netzadresse ("unique resource locator", URL) mit der vorgebbaren Liste von kostenpflichtigen eindeutigen Netzadressen im Computersystem des Internetserviceproviders.

Das Computersystem der Erfindung ist zur Vergebührung jeder beliebigen Art von Inhalten geeignet, da die Inhalte selbst nicht modifiziert werden müssen. Da keine Transaktionen mit dem Internetserver durchgeführt werden, ist das System schnell und störungsunanfällig und für die Verrechnung von Kleinstbeträgen ("micropayment") besonders gut geeignet. Der Benutzer bleibt anonym gegenüber dem Betreiber des Internetservers, und es werden auch keine vertraulichen Zahlungsinformationen über das Internet übermittelt.

Um die Abrechnung über das Computersystem der Erfindung sicherzustellen, werden die Betreiber von Internetservern zweckmäßigerweise die Abgabe von kostenpflichtigen Inhalten nur an solche Internetserviceprovider zulassen, denen sie ihre eindeutigen Netzadressen zur Vergebührung bekanntgegeben haben.

Eine bevorzugte Ausführungsform der Erfindung zeichnet sich dadurch aus, daß der Proxy das Herunterladen des Inhaltes auf den Klientcomputer überwacht und bei einem erfolglosen oder fehlerhaften Herunterladen den Verrechnungsserver zu einem Rückgängigmachen der Belastungsaufforderung veranlaßt. Dadurch wird eine Transaktionsverarbeitung für die Verrechnung geschaffen. Vor dem Herunterladen des Inhaltes wird die Belastung veranlaßt, so daß es zu keinem unbelasteten Herunterladen kostenpflichtiger Inhalte kommen kann, die Belastung wird aber nur dann durchgeführt bzw. validiert, wenn das Herunterladen erfolgreich war, oder aber wieder rückgängig gemacht, wenn das Herunterladen fehlgeschlagen hat. Die Störungsunanfälligkeit des Computersystems wird dadurch weiter erhöht.

Bevorzugt wird vorgesehen, daß der Proxy vor dem Weiterleiten einer von einem Klientcomputer empfangenen eindeutigen Netzadresse, der eine Gebühr zugeordnet ist, zu einem Internetserver den Verrechnungsserver abfragt, ob das Konto eine für die Gebühr ausreichende Deckung hat, und die Weiterleitung nur bei ausreichender Deckung veranlaßt. Dadurch kann verhindert werden, daß kostenpflichtige Seiten trotz mangelnder Kontodeckung heruntergeladen werden.

Aus demselben Grund kann alternativ oder zusätzlich vorgesehen werden, daß der Proxy vor dem Weiterleiten einer von einem Klientcomputer empfangenen eindeutigen Netzadresse, der eine Gebühr zugeordnet ist, zu einem Internetserver die Belastungsaufforderung an den Verrechnungsserver sendet, und die Weiterleitung erst nach erfolgreicher Durchführung der Belastung veranlaßt.

Eine weitere bevorzugte Variante der Erfindung besteht darin, daß der Proxy vor dem Weiterleiten einer von einem Klientcomputer empfangenen eindeutigen Netzadresse, der eine Gebühr zugeordnet ist, eine bestätigende Rückfrage beim Klientcomputer durchführt. Dadurch kann der Benutzer darauf hingewiesen werden, daß eine Vergebührung bevorsteht.

In jedem Fall ist es besonders günstig, wenn einer eindeutige Netzadresse für verschiedene Kategorien von Identitäten unterschiedliche Gebühren in der Liste der Datenbank zugeordnet sind. Dadurch kann die Verrechnung eines Inhaltes abhängig vom Benutzer oder der Kategorie eines Benutzers erfolgen.

Noch eine weitere bevorzugte Ausgestaltung des erfindungsgemäßen Computersystems besteht darin, daß die Datenbank eine Liste von Identitäten und zugeordneten Gebührenberechtigungen enthält und der Proxy die Weiterleitung einer eindeutigen Netzadresse, der eine Gebühr zugeordnet ist, nur bei Vorliegen der entsprechenden Gebührenberechtigung durchführt. Damit kann das Laden kostenpflichtiger Seiten für bestimmte Benutzer gesperrt werden.

In jedem Fall ist es besonders günstig, wenn gemäß einem weiteren Merkmal der Erfindung jeder Gebühr in der Datenbank eine Zeitspanne zugeordnet ist, innerhalb welcher ein Konto nur einmal mit dieser Gebühr zu bealsten ist, wobei der Proxy diese Zeitspanne aus der Datenbank ermittelt und in der Belastungsaufforderung an den Verrechnungsserver sendet. Damit können auch solche Inhalte vergebührt werden, welche nur einmal innerhalb einer bestimmten Zeitspanne verrechnet werden sollen, beispielsweise die Tageszeitung (einmal pro Tag), eine Wochenzeitschrift (einmal pro Woche) usw.

Gemäß einer weiteren Ausführungsform kann vorgesehen werden, daß die Datenbank eine Liste von eindeutigen Netzadressen und zugeordneten Ladesperren enthält und der Proxy die Weiterleitung einer eindeutigen Netzadresse nur bei Nichtvorliegen einer entsprechenden Ladesperre durchführt. Damit kann der Proxy gleichzeitig als Filter zum Blockieren unerwünschter URLs verwendet werden, wie in der Technik an sich bekannt.

Auch ist es besonders günstig, wenn der Proxy mit einem Internetcache ausgestattet ist, d.h. ein sogenannter "caching proxy" ist. Das Herunterladen gebührenpflichtiger Inhalte, welche bereits im Cache des Proxy vorliegen, läuft in diesem Fall vollkommen ohne Mitwirkung des jeweiligen Internetservers ab.

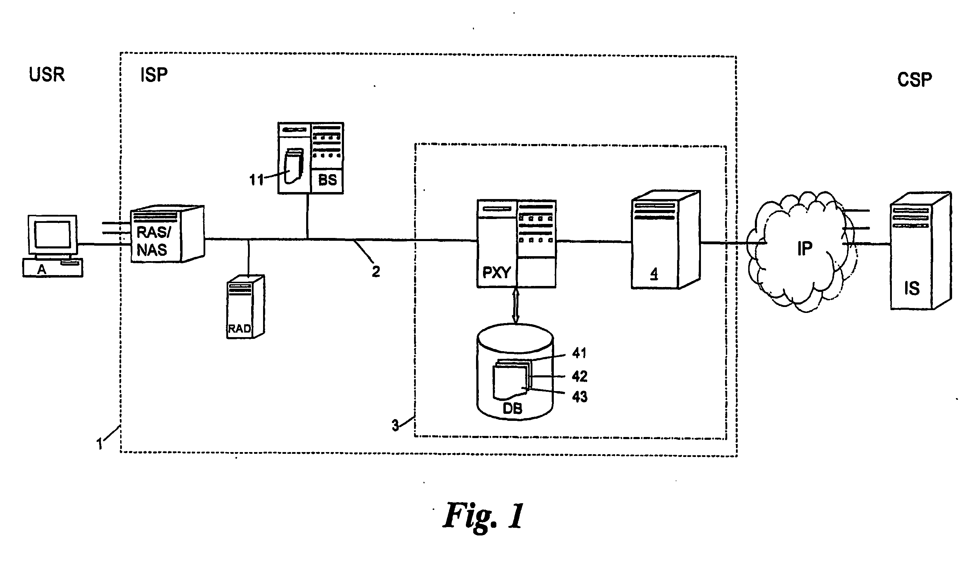

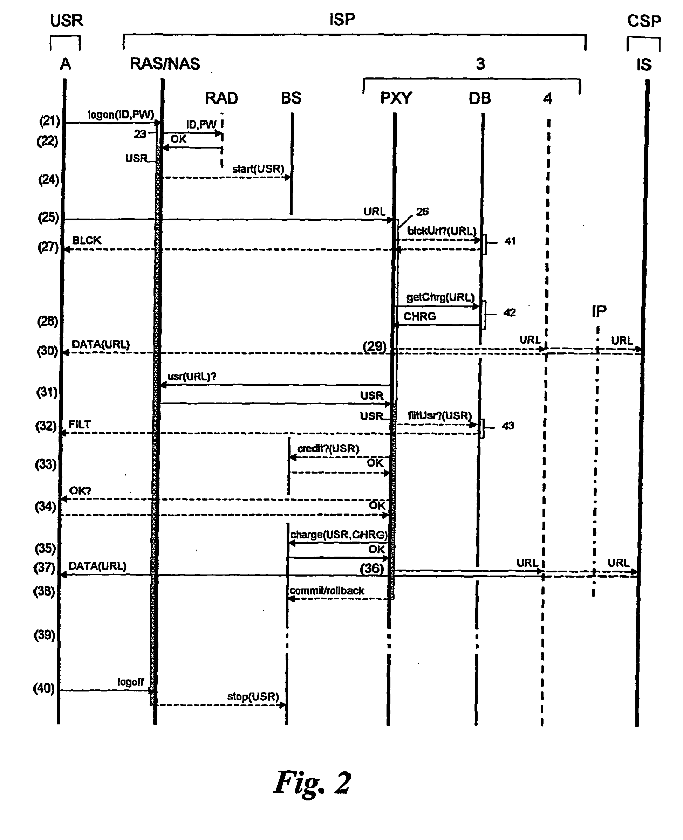

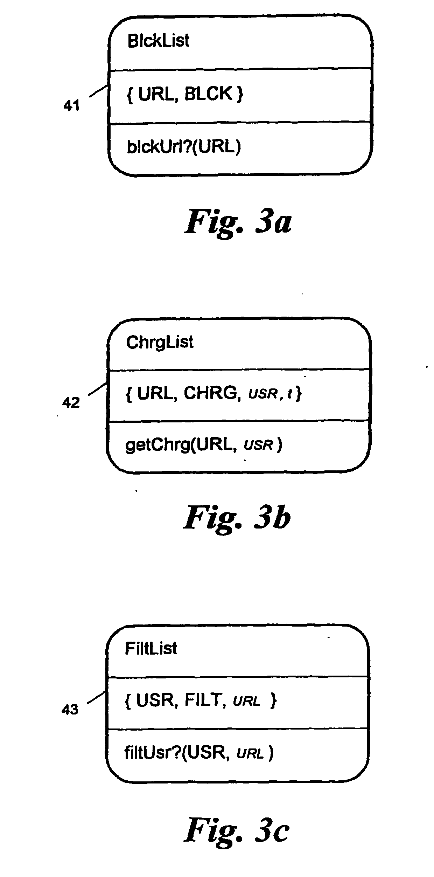

Die Erfindung wird nachstehend anhand eines in den Zeichnungen dargestellten Ausführungsbeispiels näher erläutert. In den Zeichnungen zeigen Fig. 1 ein Blockschaltbild des Computersystems der Erfindung, Fig. 2 ein Sequenzdiagramm der Funktionen des Computersystems von Fig. 1 und die Fig. 3a bis 3c den Aufbau beispielhafter Datenobjekte in der Datenbank des Computersystems.

Fig. 1 zeigt ein Computersystem 1, das von einem Internetserviceprovider (ISP) betrieben wird, um einer Vielzahl von Benutzern an Klientcomputern A (nur einer stellvertretend dargestellt) Zugang zum Internet IP zur Verfügung zu stellen.

Im Internet IP bzw. daran angeschlossen befinden sich eine Vielzahl von Internetservern IS (nur einer stellvertretend dargestellt), welche Inhalte unter eindeutigen Netzadressen ("unique resource locators", URLs) zum Herunterladen ("download") anbieten. Jeder Klientcomputer A steht im Einflußbereich eines Benutzers USR und jeder Internetserver IS im Einflußbereich eines Contentserviceproviders CSP.

Das Computersystem 1 weist benutzerseitig einen Zugangsserver RAS/NAS auf. Wenn der Zugangsserver beispielsweise Telefonleitungs-Wählzugänge für Klientcomputer A zur Verfügung stellt, wird er häufig als "remote access server" (RAS) bezeichnet. Bietet der Zugangsserver Datennetzzugänge für Klientcomputer A, z.B. in Form eines Intranets, eines hauseigenen Datennetzwerkes, eines LANs, eines "regional area networks" oder "metropolitan area networks" (z.B. Kabelfernsehnetzes) usw., wird er häufig als "network access server" (NAS) bezeichnet, wie in der Technik bekannt.

Der Zugangsserver RAS/NAS steht über ein Netzwerk 2 mit einem Gateway 3 in Verbindung, das an das Internet IP angeschlossen ist bzw. Teil des Internets IP ist. Das Netzwerk 2 kann ein internes Datennetz sein, bevorzugt nach dem Internetprotokoll arbeitend, oder wiederum selbst das Internet.

An das Datennetz 2 sind ferner ein Authentifizierungsserver RAD und ein Verrechnungsserver BS angeschlossen. Der Authentifizierungsserver RAD arbeitet beispielsweise nach dem RADIUS-Protokoll ("remote access dial-in user service") und verwaltet Benutzerkennungen und Paßwörter, wie in der Technik bekannt.

Der Verrechnungsserver BS führt für jeden Klientcomputer A, genauer für jede Identität USR eines Benutzers an einem Klientcomputer A, ein geldwertes Konto 11. Der Verrechnungsserver 35 ist befähigt, auf über das Datennetz 2 empfangene Belastungsaufforderungen ("charge") eine entsprechende Belastung eines Benutzerkontos 11 durchzuführen. Es versteht sich, daß die Belastungsaufforderung eine Angabe über die Benutzeridentität USR und/oder das Konto 11 und bevorzugt die Höhe der anzulastenden Gebühr CHRG umfassen. Die Angabe der Gebühr CHRG kann entfallen, wenn für eine Belastungsaufforderung eine vorgegebene Gebührenhöhe als vereinbart gilt.

Das Gateway 3 umfaßt einen Proxy PXY, welcher nach dem Internetprotokoll in an sich bekannter Weise Datenpakete in beiden Richtungen weiterleitet und dabei entsprechende Adreßtransformationen und -maskierungen durchführen kann, falls erforderlich. Bevorzugt ist der Proxy PXY mit einem Cache 4 ausgestattet, welcher aus dem Internet IP empfangene Inhalte in an sich bekannter Weise pufferspeichernd kaschiert ("caching"). Der Cache 4 kann auch im Proxy PXY selbst implementiert sein. Der Proxy PXY kann auch lediglich die Funktion einer Firewall haben, d.h. eine Firewall sein, oder zusätzlich die Funktion einer Firewall haben; alle diese Varianten werden in der vorliegenden Beschreibung von dem Begriff "Proxy" umfaßt.

Der Proxy PXY leitet von Klientcomputern A empfangene eindeutige Netzadressen ("unique resource locators") URL zum Internet IP und damit zu den so adressierten Internetservern IS weiter (sog. "Webzugriffe" der Benutzer). In der Gegenrichtung leitet der Proxy PXY von Internetservern IS abgegebene Inhalte DATA(URL) (z.B. Internetseiten, Dateien, Bilder usw.) zu den Klientcomputern A zurück (sog. "download", "Herunterladen").

An den Proxy PXY ist eine Datenbank DB angeschlossen. Die Datenbank DB kann alternativ über das Datennetz 2 mit dem Proxy PXY in Verbindung stehen oder direkt im Proxy PXY implementiert sein. Die Datenbank DB enthält in dem gezeigten Beispiel drei Listen 41, 42, 43, deren Aufbau später noch anhand der Fig. 3a bis 3c näher erläutert wird. Die Listen 41 und 43 sind optional; die Liste 42 enthält einen vorgebbaren Satz von eindeutigen Netzadressen URL und zugeordneten Gebühren CHRG zum Abruf durch den Proxy PXY in der folgenden Art und Weise.

Zur Erläuterung dieser Funktionalitäten des Computersystems 1 und des Proxys PXY wird nun auf die Fig. 2 Bezug genommen. In dem Sequenzdiagramm von Fig. 2 sind die Rollen Benutzer USR, Internetserviceprovider ISP und Contentserviceprovider CSP sowie die Komponenten A, RAS/NAS, RAD, BS, PXY, DB und Cache 4 und ihre Wechselwirkung im zeitlichen Ablauf dargestellt.

In einem ersten Schritt 21 sendet der Klientcomputer A einen Logon-Request an den Zugangsserver RAS/NAS unter Angabe einer Benutzerkennung ID und eines Benutzerpaßwortes PW. Der Zugangsserver RAS/NAS validiert im Schritt 22 im Wechselspiel mit dem Authentifizierungsserver RAD die Benutzerkennung ID und das Paßwort PW unter Verwendung des RADIUS-Protokolles, wie in der Technik bekannt. Nach erfolgreicher Authentifizierung verfügt der Zugangsserver RAS/NAS über eine validierte Identität USR für die aktuelle Sitzung mit 23 mit dem Klientcomputer A.

In dem optionalen Schritt 24 kann der Zugangsserver RAS/NAS den Beginn der Sitzung 23 als Startpunkt für eine anschaltzeit- oder byteabhängige Verrechnung der Zugangsdienstleistung des Internetserviceproviders ISP unter Angabe der Identität USR zur Referenzierung des entsprechenden Kontos 11 an den Verrechnungsserver BS senden, wie durch die Nachricht bzw. den Aufruf start(USR) veranschaulicht.

Zu einem beliebigen Zeitpunkt im Verlauf der Sitzung 23 sendet der Benutzer USR am Klientcomputer A nun eine eindeutige Netzadresse URL an das Computersystem 1, um die durch diese eindeutige Netzadresse URL referenzierten Daten DATA(URL) herunterzuladen (Schritt 25). Die eindeutige Netzadresse URL gelangt über den Zugangsserver RAS/NAS zum Proxy PXY, welcher für jeden solchen URL-Request einen Prozeß 26 eröffnet.

Es ist Aufgabe des Proxys PXY, empfangene URL-Requests an das Internet IP oder zumindest an seinen Cache 4 weiterzuleiten (Schritte 29, 36), die URLs auf Kostenpflichtigkeit zu prüfen und erforderlichenfalls zu vergebühren. Es ist dabei unbeachtlich, ob die Überprüfung auf Kostenpflichtigkeit tatsächlich vor der Weiterleitung des URL-Requests stattfindet, wie in Fig. 2 gezeigt ("Abfangen" des Requests), oder ob die Weiterleitung des URL-Requests sofort erfolgt und nur der heruntergeladene Inhalt erst nach Überprüfung der Kostenpflichtigkeit und gegebenenfalls der Vergebührung weitergeleitet wird ("Detektieren" des Requests), oder ob sowohl die Weiterleitung des URL-Requests als auch der heruntergeladenen Inhalte sofort durchgeführt wird und die Überprüfung auf Kostenpflichtigkeit und Vergebührung erst im Anschluß erfolgt ("Mithören" des Meldungsverkehrs); alle diese Varianten werden in der vorliegenden Beschreibung von dem Begriff "Überwachen" der von den Klientcomputern A gesendeten eindeutigen Netzadressen URL umfaßt. Demgemäß zeigt Fig. 2 nur eine mögliche Ausführungsform der zeitlichen Abfolge; für den Fachmann ist klar, daß die Schritte 25 bis 38 auch entsprechend umgereiht werden könnten.

In dem optionalen Schritt 27 greift der Proxy PXY nun auf die Liste 41 in der Datenbank DB zu, um festzustellen, ob die angeforderte URL einer generellen, d.h. benutzerunabhängigen Ladesperre BLCK unterliegt. Ein beispielhafter Aufbau der Liste 41 ist in Fig. 3a gezeigt. Die Liste 41 hat den Namen BlckList und enthält zumindest Dupel aus eindeutigen Netzadressen URL und zugeordneten Ladesperren BLCK. Jede Ladesperre BLCK gibt an, ob der Zugriff auf die URL gestattet ist oder nicht. Die Zugriffsfunktion blckUrl(URL) liefert die einer URL zugeordnete Ladesperre BLCK zurück.

Stellt der Prozeß 26 am Proxy PXY das Vorliegen einer solchen Ladesperre fest, wird eine entsprechende Sperrinformation an den Klientcomputer A gesandt und der Prozeß 26 wird beendet; die weiteren Schritte 28 bis 38 werden dann nicht mehr durchgeführt.

Andernfalls wird zu Schritt 28 übergegangen, in welchem der Proxy PXY die Kostenpflichtigkeit der URL überprüft. Dazu greift der Proxy PXY auf die Liste 42 zu, von der ein beispielhafter Aufbau in Fig. 3b dargestellt ist.

Die Liste 42 hat den Namen ChrgList und enthält zumindest Dupel von vorgebbaren eindeutigen Netzadressen URL mit zugeordneten Gebühren CHRG. Optional kann jeder Gebühr CHRG eine Zeitspanne t zugeordnet werden, innerhalb welcher diese Gebühr nur einmal pro URL verrechnet werden soll. Fakultativ können auch benutzerabhängige oder von einer Kategorisierung der Benutzer abhängige Gebühren CHRG definiert werden, wie durch das Quadrupel {URL, CHRG, USR, t} veranschaulicht ist.

In dem Beispiel von Fig. 2 kennt der Prozeß 26 zum Zeitpunkt des Schrittes 28 noch nicht die Identität USR des Klientcomputers A; wenn der (nachstehend beschriebene) Schritt 31 zur Ermittlung der Identität USR vorgezogen wird (nicht dargestellt), könnte die ermittelte Identität USR zusammen mit der abzufragenden URL an die Datenbank DB gesendet werden, wie in Fig. 3b unter getChrg(URL, USR) gezeigt, um eine entsprechende benutzer- oder benutzerkategorieabhängige Gebühr CHRG(USR) zu ermitteln.

Wenn der Proxy PXY in Schritt 28 feststellt, daß die URL entweder in der Liste 42 nicht vorliegt oder die darin enthaltene Gebühreninformation CHRG den Wert Null hat, ist der herunterzuladende Inhalt DATA(URL) kostenfrei und der Proxy PXY leitet den URL-Request an den Internetserver IS oder zumindest an den Cache 4 weiter (Schritt 29). Der daraufhin vom Internetserver IS über das Internet IP empfangene Inhalt DATA(URL) wird im Schritt 30 zum Klientcomputer A weitergeleitet und der Prozeß 26 wird beendet. Die folgenden Schritte 31 bis 38 werden dann nicht mehr durchgeführt.

Andernfalls handelt es sich um kostenpflichtigen Inhalt. Im Schritt 31 ermittelt der Proxy PXY die Identität USR des anfragenden Klientcomputers A vom Zugangsserver RAS/NAS (soferne dies nicht schon früher im Rahmen des Prozesses 26 erfolgt ist). Ab dem Schritt 31 verfügt der Prozeß 26 somit über die Kenntnis der Identität USR.

In einem optionalen Schritt 32 kann der Proxy PXY in der Datenbank DB nachschlagen, ob eine benutzerabhängige Sperre besteht. Dazu fragt er die Datenbank 43 ab, von der ein beispielhafter Aufbau in Fig. 3c näher erläutert ist. Die Liste 43 hat den Namen FiltList und enthält zumindest Dupel von Identitäten USR und zugeordneten Gebührenberechtigungen FILT. Optional kann die Gebührenberechtigung FILT für einzelne oder Gruppen von URL definiert sein, wie durch das Tripel {USR, FILT, URL} in Fig. 3c veranschaulicht. Die Liste 43 verfügt über die Zugriffsfunktion filtUsr(USR) bzw. filtUsr(USR, URL), mit welcher die Gebührenberechtigung für eine vorgegebene Identität, oder eine vorgegebene Identität und eine vorgegebene eindeutige Netzadresse, ermittelt werden kann.

Gibt die Gebührenberechtigung FILT im Schritt 32 an, daß der Klientcomputer A mit der Identität USR keine Berechtigung zum Laden gebührenpflichtiger Inhalte oder keine Berechtigung zum Laden der spezifischen URL hat, wird eine entsprechende Meldung an den Klientcomputer A zurückgegeben und der Prozeß 26 beendet. Die nachfolgenden Schritte 33 bis 38 werden dann nicht mehr durchgeführt.

Andernfalls schreitet der Proxy PXY zur Vergebührung voran. Dazu kann zunächst in einem optionalen Schritt 33 beim Verrechnungsserver BS rückgefragt werden, ob der Benutzer mit der Identität USR kreditwürdig ist, d.h. sein Konto 11 eine entsprechende Deckung aufweist. Es ist möglich, bei der Abfrage im Schritt 33 auch die Höhe der zu belastenden Gebühr CHRG zu übergeben (nicht dargestellt). Bei nicht ausreichender Dekkung wird wieder der Prozeß 26 beendet und eine entsprechende Meldung an den Klientcomputer A ausgegeben (nicht gezeigt).

In dem ebenfalls optionalen Schritt 34 kann der Proxy PXY eine bestätigende Rückfrage beim Klientcomputer A durchführen, ob der Inhalt tatsächlich geladen und vergebührt werden soll. Im Verneinungsfalle wird der Prozeß 26 abgebrochen und eine entsprechende Mitteilung an den Klientcomputer A zurückgegeben (nicht gezeigt).

Im anderen Falle wird zu dem kostenpflichtigen Herunterladen und der Vergebührung übergegangen, Schritte 35 bis 38. Die Belastung des Kontos 11 und das Herunterladen des gebührenpflichtigen Inhaltes DATA(URL) sind in dem Beispiel von Fig. 2 in Form eines verschränkten Transaktionsprozesses dargestellt, obwohl dies nicht zwingend ist. Dabei sendet zunächst der Proxy PXY eine Belastungsaufforderung charge (USR, CHRG) unter Angabe der Identität USR und der zu belastenden Gebühr CHRG an den Verrechnungsserver BS (Schritt 35). Im einfachsten Fall einer Pauschalgebühr kann die Angabe der Gebührenhöhe CHRG entfallen. Anschließend führt der Proxy PXY das eigentliche Herunterladen ("download") des Inhaltes DATA(URL) vom Cache 4 bzw. Internetserver IS durch (Schritt 36), wie bereits anhand des Schrittes 30 erläutert. Schließlich bestätigt der Proxy PXY die Durchführung der Belastungstransaktion an den Verrechnungsserver BS nach erfolgreichem Herunterladen (Nachricht "commit") oder storniert die Belastung bei erfolglosem oder fehlerhaftem Herunterladen (Nachricht "rollback"), siehe Schritt 38. Der Prozeß 26 ist dann abgeschlossen und wird aufgehoben.

Im Verlauf einer Sitzung 23 des Klientcomputers A am Zugangsserver RAS/NAS können die Schritte 25 bis 38 zu beliebigen Zeiten wiederholt werden, d.h. mehrere Prozesse 26 ablaufen, wie unter 39 angedeutet.

Zur Beendigung der Sitzung 23 sendet der Klientcomputer A einen Logoff-Request an den Zugangsserver RAS/NAS. Der Zugangsserver RAS/NAS beendet die Sitzung 23 und sendet gegebenenfalls eine Aufforderung stop(USR) zur Beendigung der zeit- oder byteabhängigen Vergebührung der Sitzung 23 an den Verrechnungsserver BS.

Die Erfindung ist selbstverständlich nicht auf die dargestellten Ausführungsbeispiele beschränkt, sondern umfaßt alle Varianten und Modifikationen, die in den Rahmen der angeschlossenen Ansprüche fallen.

## Patentansprüche

1. Computersystem (1) zum Zurverfügungstellen des Zuganges zum Internet (IP) für einen Klientcomputer (A) und zum Vergebühren des Herunterladens von Inhalten (DATA) von einem Internetserver (IS) auf den Klientcomputer (A), wobei der Klientcomputer (A) ausgestattet ist das Herunterladen durch Senden einer eindeutigen Netzadresse. (URL) des Inhaltes (DATA) an den Internetserver (IS) auszulösen, mit
einem Zugangsserver (RAS/NAS) für den Zugriff der Klientcomputer (A), welcher ausgestattet ist jeden Klientcomputer (A) mittels einer Identität (USR) zu identifizieren,
einem Verrechnungsserver (BS), der ausgestattet ist für jede Identität (USR) ein Konto (11) zu führen und auf eine Belastungsaufforderung (charge) hin mit einer Gebühr (CHRG) zu belasten, und
einem Proxy (PXY), welcher ausgestattet ist den Zugangsserver (RAS/NAS) mit dem Internet (IP) zu verbinden und von Klientcomputern (A) empfangene eindeutige Netzadressen (URL) über das Internet (IP) zu den Internetservern (IS) und von den Internetservern (IS) über das Internet (IP) heruntergeladene Inhalte (DATA) zu den Klientcomputern (A) weiterzuleiten,
**dadurch gekennzeichnet, daß** das Computersystem weiters aufweist
eine Datenbank (DB), die zumindest eine vorgebbare Liste (42) von eindeutigen Netzadressen (URL) und zugeordneten Gebühren (CHRG) enthält und mit dem Proxy (PXY) in Verbindung steht,
wobei der Proxy (PXY) ausgestattet ist jede von einem Klientcomputer (A) gesendete eindeutige Netzadresse (URL) zu überwachen und in der Datenbank (DB) nachzuschlagen, ob dieser eine Gebühr (CHRG) zugeordnet ist, und
bejahendenfalls, nachdem er zuvor die Identität (USR) des die eindeutige Netzadresse (URL) sendenden Klientcomputers (A) vom Zugangsserver (RAS/NAS) abgefragt hat, eine Belastungsaufforderung (charge) an den Verrechnungsserver (BS) zu senden.

2. Computersystem nach Anspruch 1, **dadurch gekennzeichnet, daß** der Proxy (PXY) ausgestattet ist das Herunterladen des Inhaltes (DATA) auf den Klientcomputer (A) zu überwachen und bei einem erfolglosen oder fehlerhaften Herunterladen den Verrechnungsserver (BS) zu einem Rückgängigmachen der Belastungsaufforderung (charge) zu veranlassen (rollback).

3. Computersystem nach Anspruch 1 oder 2, **dadurch gekennzeichnet, daß** der Proxy (PXY) ausgestattet ist vor dem Weiterleiten einer von einem Klientcomputer (A) empfangenen eindeutigen Netzadresse (URL), der eine Gebühr (CHRG) zugeordnet ist, zu einem Internetserver (IS) den Verrechnungsserver (BS) abzufragen, ob das Konto eine für die Gebühr (CHRG) ausreichende Deckung hat, und die Weiterleitung nur bei ausreichender Deckung zu veranlassen.

4. Computersystem nach einem der Ansprüche 1 bis 3, **dadurch gekennzeichnet, daß** der Proxy (PXY) ausgestattet ist vor dem Weiterleiten einer von einem Klientcomputer (A) empfangenen eindeutigen Netzadresse (URL), der eine Gebühr (CHRG) zugeordnet ist, zu einem Internetserver (IS) die Belastungsaufforderung (charge) an den Verrechnungsserver (BS) zu senden, und die Weiterleitung erst nach erfolgreicher Durchführung der Belastung zu veranlassen.

5. Computersystem nach einem der Ansprüche 1 bis 4, **dadurch gekennzeichnet, daß** der Proxy (PXY) ausgestattet ist vor dem Weiterleiten einer von einem Klientcomputer (A) empfangenen eindeutigen Netzadresse (URL), der eine Gebühr (CHRG) zugeordnet ist, eine bestätigende Rückfrage beim Klientcomputer (A) durchzuführen.

6. Computersystem nach einem der Ansprüche 1 bis 5, **dadurch gekennzeichnet, daß** einer eindeutigen Netzadresse (URL) für verschiedene Kategorien von Identitäten (USR) unterschiedliche Gebühren (CHRG) in der Liste (42) der Datenbank (DB) zugeordnet sind.

7. Computersystem nach einem der Ansprüche 1 bis 6, **dadurch gekennzeichnet, daß** die Datenbank eine Liste (43) von Identitäten (USR) und zugeordneten Gebührenberechtigungen (FILT) enthält und der Proxy (PXY) ausgestattet ist die Weiterleitung einer eindeutigen Netzadresse (URL), der eine Gebühr (CHRG) zugeordnet ist, nur bei Vorliegen der entsprechenden Gebührenberechtigung (FILT) durchzuführen.

8. Computersystem nach einem der Ansprüche 1 bis 7, **dadurch gekennzeichnet, daß** jeder Gebühr (CHRG) in der Datenbank (DB) eine Zeitspanne (t) zugeordnet ist, innerhalb welcher ein Konto (11) nur einmal mit dieser Gebühr (CHRG) zu belasten ist, wobei der Proxy (PXY) ausgestattet ist diese Zeitspanne (t) aus der Datenbank (DB) zu ermitteln und in der Belastungsaufforderung (charge) an den Verrechnungsserver (BS) zu senden.

9. Computersystem nach einem der Ansprüche 1 bis 8, **dadurch gekennzeichnet, daß** die Datenbank eine Liste (41) von eindeutigen Netzadressen (URL) und zugeordneten Ladesperren (BLCK) enthält und der Proxy (PXY) ausgestattet ist die Weiterleitung einer eindeutigen Netzadresse (URL) nur bei Nichtvorliegen einer entsprechenden Ladesperre (BLCK) durchzuführen.

10. Computersystem nach einem der Ansprüche 1 bis 9, **dadurch gekennzeichnet, daß** der Proxy (PXY) mit einem Internetcache (4) ausgestattet ist.

## Claims

1. A computer system (1) for providing access to the internet (IP) for a client computer (A) and for taxing the download of contents (DATA) from an internet server (IS) to the client computer (A), wherein the client computer (A) is adapted to activate downloading by sending an unambiguous network address (URL) of said contents (DATA) to the internet server (IS),
said computer system comprising
an access server (RAS/NAS) providing access for the client computer (A), which access server is adapted to identify each client computer (A) by means of an identifier (USR),
a settlement server (BS) which is adapted to keep an account (11) for each identifier (USR) and to charge taxes (CHRG) in response to a charge request, and
a proxy (PXY) which is adapted to connect the access server (RAS/NAS) to the internet (IP) and to transmit unambiguous network addresses (URL) received from client computers (A) to the internet servers (IS) via the internet (IP) and to transmit the contents (DATA) downloaded from the internet servers (IS) via the internet (IP) to the client computers (A),
**characterized in that** said computer system further comprises
a data bank (DB), which contains at least one pre-definable list (42) of unambiguous network addresses (URL) and allocated taxes (CHRG) and is connected to the proxy (PXY),
wherein the proxy (PXY) is adapted to monitor each unambiguous network address (URL) sent by a client computer (A) and to query said data bank (DB) whether a tax (CHRG) is allocated to the said address, and, if so, to send a charge to the settlement server (BS) after the proxy has previously queried the identifier (USR) of the client computer (A) sending the unambiguous network address (URL), from the access server (RAS/NAS).

2. A computer system as defined in Claim 1, **characterized in that** the proxy (PXY) is adapted to monitor the download of said contents (DATA) to the client computer (A) and to cause said settlement server (BS) to cancel (rollback) the charge in the case of an unsuccessful or faulty download.

3. A computer system as defined in Claim 1 or Claim 2, **characterized in that** before it has transmitted an unambiguous network address (URL) received from a client computer (A) and to which a tax (CHRG) is allocated to an internet server (IS), the proxy (PXY) is adapted to query the settlement server (BS) to ascertain whether the account has sufficient credit to pay said tax (CHRG) and to initiate the transmission only if sufficient credit is available.

4. A computer system as defined in any one of Claims 1 to 3, **characterized in that** before it has transmitted an unambiguous network address (URL) received from a client computer (A) and to which a tax (CHRG) is allocated to an internet server (IS), the proxy (PXY) is adapted to send the charge request to said settlement server (BS) and to initiate the transmission only after successful deduction of the tax from the account.

5. A computer system as defined in any one of Claims 1 to 4, **characterized in that** before it has transmitted an unambiguous network address (URL) received from a client computer (A) and to which a tax (CHRG) is allocated, the proxy (PXY) is adapted to request confirmation from said client computer (A).

6. A computer system as defined in any one of Claims 1 to 5, **characterized in that** various taxes (CHRG) are allocated to an unambiguous network address (URL) for different categories of identifiers (USR) in the list (42) in said data bank (DB).

7. A computer system as defined in any one of Claims 1 to 6, **characterized in that** said data bank contains a list (43) of identifiers (USR) and allocated tax authorizations (FILT) and the proxy (PXY) is adapted to execute the transmission of an unambiguous network address (URL) to which a tax (CHRG) is allocated only when the corresponding tax authorization (FILT) exists.

8. A computer system as defined in any one of Claims 1 to 7, **characterized in that** a period of time (t) is allocated to each tax (CHRG) in the data bank (DB), within which period of time an account (11) can be charged only once with said tax (CHRG), wherein the proxy (PXY) is adapted to determine this period of time (t) from the data bank (DB) and to send said charge to said settlement server (BS) within said period of time.

9. A computer system as defined in any one of Claims 1 to 8, **characterized in that** said data bank contains a list (41) of unambiguous network addresses (URL) and allocated blockers (BLCK) and the proxy (PXY) is adapted to execute the transmission of an unambiguous network address (URL) only when no corresponding blocker (BLCK) exists.

10. A computer system as defined in any one of Claims 1 to 9, **characterized in that** the proxy (PXY) is equipped with an internet cache (4).

## Revendications

1. Système informatique (1) destiné à mettre à disposition l'accès à Internet (IP) pour un ordinateur client (A) et à taxer le téléchargement de contenus (DATA) d'un serveur Internet (IS) à l'ordinateur client (A), l'ordinateur client (A) étant apte à déclencher le téléchargement par l'envoi d'une adresse réseau univoque (URL) de contenu (DATA) au serveur Internet (IS), pourvu
d'un serveur d'accès (RAS/NAS) pour l'accès de l'ordinateur client (A), qui est apte à identifier chaque ordinateur client (A) au moyen d'une identité (USR),
d'un serveur de calcul (BS), qui est apte à gérer un compte (11) pour chaque identité (USR) et à le charger avec une charge (CHRG) sur demande de charge (charge), et
d'un proxy (PXY), qui est apte à lier le serveur d'accès (RAS/NAS) à Internet (IP) et à transmettre les adresses réseau univoques (URL) reçues par les ordinateurs clients (A) par Internet (IP) aux serveurs Internet (IS) et les contenus (DATA) téléchargés sur Internet (IP) par les serveurs Internet (IS) aux ordinateurs clients (A),
**caractérisé en ce que** le système informatique comporte également
une base de données (DB), qui contient au moins une liste (42) prédéfinissable d'adresses réseau univoques (URL) et de charges associées (CHRG) et qui est en liaison avec le proxy (PXY),
le proxy (PXY) étant apte à surveiller chaque adresse réseau univoque (URL) envoyée par un ordinateur client (A) et à vérifier dans la base de données (DB) si celle-ci est associée à un tarif (CHRG), et
dans l'affirmative, après avoir demandé au préalable l'identité (USR) de l'ordinateur client (A) envoyant l'adresse réseau univoque (URL) au serveur d'accès (RAS/NAS), d'envoyer une demande de facturation (charge) au serveur de calcul (BS).

2. Système informatique selon la revendication 1, **caractérisé en ce que** le proxy (PXY) est apte à surveiller le téléchargement du contenu (DATA) sur l'ordinateur client (A) et à autoriser (rollback) en cas de téléchargement non réussi ou erroné les serveurs de calcul (BS) à une annulation de la demande de facturation (charge).

3. Système informatique selon la revendication 1 ou 2, **caractérisé en ce que** le proxy (PXY) est apte à interroger les serveurs de calcul (BS) avant la transmission d'une adresse réseau univoque (URL) reçue par un ordinateur client (A) vers un serveur Internet (IS), qui est associée à un tarif (CHRG), pour savoir si le compte dispose d'une couverture suffisante pour la charge (CHRG), et à autoriser la transmission uniquement en cas de couverture suffisante.

4. Système informatique selon l'une des revendications 1 à 3, **caractérisé en ce que** le proxy (PXY) est apte à envoyer la demande de facturation (charge) aux serveurs de calcul (BS) avant la transmission d'une adresse réseau univoque (URL) reçue par un ordinateur client (A) vers un serveur Internet (IS), qui est associée à un tarif (CHRG) et à autoriser la transmission après exécution réussie.

5. Système informatique selon l'une des revendications 1 à 4, **caractérisé en ce que** le proxy (PXY) est apte à exécuter une requête de confirmation sur l'ordinateur client (A) avant la transmission d'une adresse réseau univoque (URL), qui est associée à un tarif (CHRG), reçue par l'un des ordinateurs clients (A).

6. Système informatique selon l'une des revendications 1 à 5, **caractérisé en ce que** différents tarifs (CHRG) dans la liste (42) de la base de données (DB) sont associées à une adresse réseau univoque (URL) pour diverses catégories d'identités (USR).

7. Système informatique selon l'une des revendications 1 à 6, **caractérisé en ce que** la base de données contient une liste (43) d'identités (USR) et de catégories de tarifs (FILT) et **en ce que** le proxy (PXY) est équipé afin d'exécuter la transmission d'une adresse réseau univoque (URL), qui est associée à un tarif (CHRG), uniquement si la catégorie de tarif (FILT) correspondante existe.

8. Système informatique selon l'une des revendications 1 à 7, **caractérisé en ce que** chaque tarif (CHRG) de la base de données (DB) est associé à un intervalle de temps (t), à l'intérieur duquel un compte (11) doit uniquement être facturé une fois avec ce tarif (CHRG), le proxy (PXY) étant apte à déterminer cet intervalle de temps (t) à partir de la base de données (DB) et à l'envoyer dans la demande de facturation (charge) aux serveurs de calcul (BS).

9. Système informatique selon l'une des revendications 1 à 8, **caractérisé en ce que** la base de données contient une liste (41) d'adresses réseau univoques (URL) et d'arrêts de chargement associés (BLCK) et **en ce que** le proxy (PXY) est équipé afin d'exécuter la transmission d'une adresse réseau univoque (URL) uniquement si un arrêt de chargement (BLCK) correspondant n'est pas présent.

10. Système informatique selon l'une des revendications 1 à 9, **caractérisé en ce que** le proxy (PXY) est équipé d'un cache Internet (4).
